Europäisches Patentamt

European Patent Office

Office européen des brevets

(19)

(11) Veröffentlichungsnummer: **0 268 134 B1**

## (12) EUROPÄISCHE PATENTSCHRIFT

(45) Veröffentlichungstag der Patentschrift: **08.05.91**

(51) Int. Cl.⁵: **F02F 11/00**, F16J 15/12

(21) Anmeldenummer: **87116133.7**

(22) Anmeldetag: **03.11.87**

(54) **Zylinderkopfdichtung.**

(30) Priorität: **15.11.86 DE 3639160**

(43) Veröffentlichungstag der Anmeldung:
**25.05.88 Patentblatt 88/21**

(45) Bekanntmachung des Hinweises auf die
Patenterteilung:
**08.05.91 Patentblatt 91/19**

(84) Benannte Vertragsstaaten:
**DE ES FR GB IT SE**

(56) Entgegenhaltungen:
**DE-A- 1 919 873     DE-A- 3 217 329**
**DE-A- 3 223 003     FR-A- 2 424 455**
**FR-A- 2 512 155     GB-A- 931 710**
**US-A- 1 782 087     US-A- 4 397 472**

**MTZ, 48 (1987)3, Die Zylinderkopfdichtung in
der Patentliteratur**

(73) Patentinhaber: **SIGRI GmbH
Werner-von-Siemens-Strasse 18
W-8901 Meitingen(DE)**

(72) Erfinder: **Eicher, Hugo, Dipl.-Ing. (FH)
Beethovenstrasse 21
W-8851 Nordendorf(DE)**
Erfinder: **Hirschvogel, Alfred
Ahornstrasse 3
W-8901 Achsheim(DE)**

## Beschreibung

Zylinderkopfdichtung für Verbrennungsmotor mit wenigstens einer einen Brennraumdurchgang bildenden Öffnung, bestehend aus einem Metallblech, das mit wenigstens einer den Brennraum konzentrisch umschließenden wellenförmigen Prägung versehen und beidseitig mit Schichten aus Graphitfolie bedeckt ist.

Zylinderkopfdichtungen bestehen in der Regel aus einem Trägerblech, das beidseitig mit elastomerhaltigen Asbestfaser-Auflagen beschichtet ist. Die Dichtung besitzt mehrere Öffnungen in Form eines oder mehrerer Brennraumdurchgänge und Durchgänge für Öl- und Kuhlwasser. Wenigstens die den Brennraumdurchgängen zugekehrten Kanten der Dichtung sind wegen der hohen thermischen und erosiven Beäufschlagung des Dichtungsmaterials von einer besonderen im Querschnitt U-förmigen Blechfassung umschlossen. Mit der Erhöhung der Motorleistung stiegen die Beanspruchungen der Dichtungen, denen vor allem die elastomere Komponente des Dichtungsmaterials nur bedingt gewachsen ist. Die Asbestkomponente ist wegen den mit ihrer Verarbeitung verbundenen gesundheitlichen Risiken umstritten, so daß man Zylinderkopfdichtungen entwickelt, die gesundheitlich unbedenkliche temperaturbeständige Werkstoffe enthalten.

Ein solcher Werkstoff ist Graphitfolie. Die temperaturbeständige, auch bei hohen Temperaturen elastische und alterungsbeständige Graphitfolie erhält men aus Graphiteinlagerungsverbindungen, die bei hohen Temperaturen zersetzt werden. Dabei bilden sich ziehharmonika-artig geblähte Gebilde, die ohne Zusatz von Bindern zu flexiblen Folien oder Schichtkörpern gewalzt oder gepreßt werden. In Flachdichtungen sind die Folien auf Bleche geklebt oder durch Einlagen in Form von Loch- oder Spießblechen oder Metallgeweben verstärkt (DE-OS 25 18 351). Wie bei asbesthaltigen Dichtungen faßt man die den Brennraumdurchgängen zugekehrte Kante der Graphitschichtkörper oder Folien durch U-förmige Blechfassungen. Als Folge des unterschiedlichen elastischen Verhaltens von Fassung und den flexiblen Graphitlagen ergeben sich häufig Biegebrüche in der Blechfassung und es ist deshalb vorgeschlagen worden, die Dicke der Graphitschichten in den gefaßten Zonen um wenigstens die Dicke der Blechfassung zu verringern (DE-OS 32 23 003). Die Graphitschichten werden bei dieser Lösung in dem gefaßten Bereich der Dichtung weniger stark verdichtet und entsprechend geringer sind die auf die Fassung wirkenden Rückstellkräfte. Nachteilig ist die aufwendige Herstellung dieser Dichtungen. Bei einer anderen Lösung ist die Dichtung gegen den Brennraumdurchgang durch eine im wesentlichen U-förmige Blechfassung geschützt, deren kurzer Schenkel etwa der Dicke der Dichtung entspricht (DE-OS 32 17 329). Ein Nachteil dieser Dichtungen ist die verringerte Flächenpressung, gerade im Bereich der Brennraumdurchgänge und den vergleichsweise großen Aufwand, der für die Abschirmung der Dichtung durch die besonderen Blechfassungen entsteht. Zur Erhöhung der Flächenpressung ist es bekannt, das stützende Metallblech der Dichtung mit Prägungen zu versehen, die den Brennraumdurchgang konzentrisch umschließen, und die gebildeten ringförmigen Vertiefungen oder Nuten mit flexiblem Graphit zu füllen (US-PS 4 397 472). Der in der Ringnut verdichtete flexible Graphit bildet eine Dichtungszone, die das Eindringen von Verbrennungsgasen oder Kühlmitteln in die Dichtung verhindern soll. Da ein wirksamer Schutz, etwa gegen aggressive Gase, offensichtlich nicht immer erreicht wird, ist in einer bevorzugten Ausführung der Dichtung die Dichtungskante gegen den Brennraumdurchgang mit einer Blechfassung mit U-förmigem Querschnitt gefaßt, deren Schenkel den mit Prägungen versehenen Teil der Dichtung abschirmen. Es ist schließlich eine Flachdichtung bekannt, bei der das Metallblech durch Stanzen über einen Teil der Graphitfolien-Kante gezogen ist (DE-OS 33 09 338). Der geringe Überdeckungsgrad eignet sich aber nicht als wirksame Abschirmung der Folie.

Der Erfindung liegt deshalb die Aufgabe zugrunde, eine Zylinderkopfdichtung zu schaffen, die auch ohne besondere Blechfassungen, die die Dichtung gegen den Brennraumdurchgang abschirmen, eine lange Lebensdauer hat.

Ausgehend von einer Zylinderkopfdichtung aus einem mit wellenförmigen Prägungen versehenen Metallblech wird die Aufgabe durch die Merkmale der unabhängigen Ansprüche 1 und 5 gelöst. Die Höhe der U-förmigen Aufbiegung ist dabei größer als die Höhe der wellenförmigen Prägung, sie ist zweckmäßig gleich der Höhe der Dichtung. Bevorzugt ist das Metallblech mit wenigstens zwei konzentrischen wellenförmigen Prägungen versehen, deren Höhe ihrem Abstand vom Brennraumdurchgang umgekehrt proportional ist. Unter den Begriffen "Höhe der Prägung" oder "Höhe der Aufbiegung" wird der Abstand der Maxima der einen Hauptschnitt des Blechs bestimmenden Kurve von der Ebene des unverformten Blechs verstanden. Enthält das Blech mehrere Prägungen $n_1$, $n_2$, $n_3$, ...., und ist $h_0$ die Höhe der Aufbiegung, so gilt für die Höhe der Prägungen $h_0 > h_1 > h_2 > h_3$, ...., wenn der Abstand der Prägungen vom Brennraumdurchgang mit steigendem Koeffizienten zunimmt. Der gegenseitige Abstand der Prägungen oder Wellen ist im allgemeinen konstant, bevorzugt beträgt er das zwei- bis dreifache der Blechdicke.

Ein erster Vorteil der erfindungsgemäßen Zylinderkopfdichtung besteht darin, daß der Graphitanteil der Dichtung ohne eine zusätzliche Blechfassung gegen erosive und oxidierende aus dem Brennraumdurchgang austretende Stoffe geschützt ist. Diese Funktion übt das Verstärkungsblech aus, das in jeder Dichtung vorhanden ist. Im Zusammenwirken der Aufbiegung mit den wellenförmigen Prägungen des Blechs werden beim Aufbringen der Dichtkräfte ringförmige Zonen mit großer Flächenpressung gebildet. Das Blech ist dabei über seine gesamte Erstreckung mit Graphitfolie bedeckt, da die Höhe der U-förmigen Aufbiegung größer als die Höhe der wellenförmigen Prägungen ist. In den Zonen erhöhter Flächenpressung hat die Dichtung eine hohe Querschnittsdichtheit und eine größere Rückfederung, insgesamt verhindert die Konturierung das Ausquetschen der Graphitfolien.

Die Erfindung wird im folgenden anhand von Zeichnungen beispielhaft erläutert.

Die Erfindung wird im folgenden anhand von Zeichnungen beispielhaft erläutert.

Es zeigen:

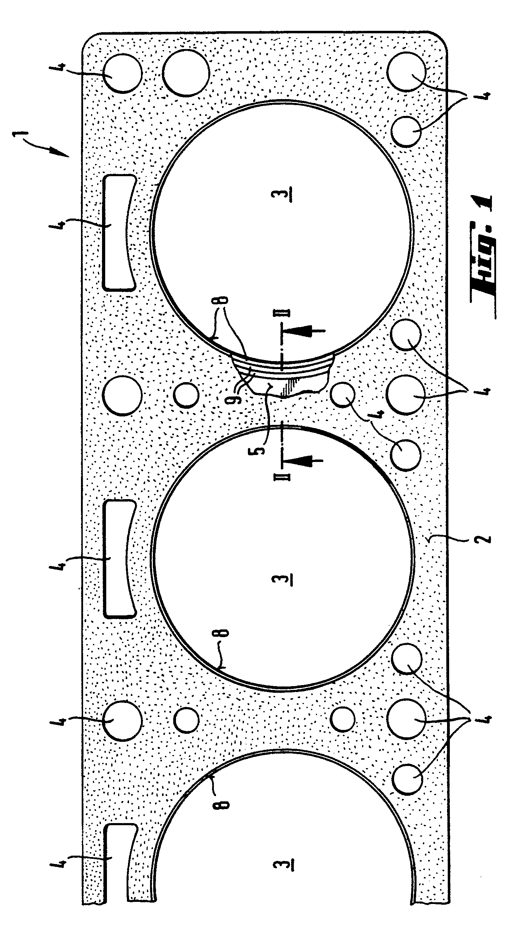

Fig. 1     eine Draufsicht auf eine Zylinderkopfdichtung,

Fig. 2     einen vergrößerten Detail-Schnitt nach der Linie II - II in Fig. 2, einer Dichtung im montierten, also verdichteten Zustand und

Fig. 3     einen vergrößerten Detail-Schnitt durch eine Dichtung mit einer anderen Prägungs-Kontur, ebenfalls im montierten Zustand.

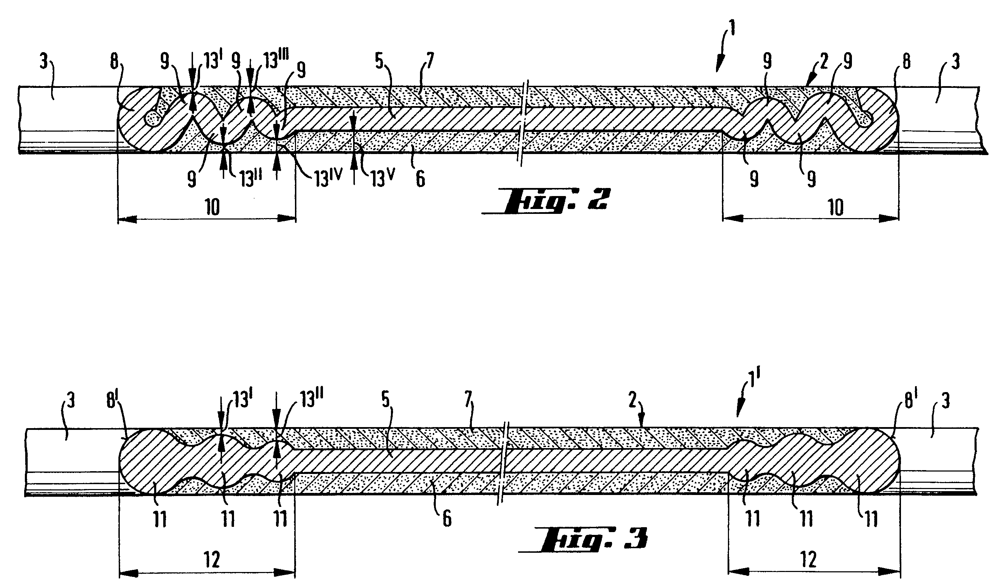

Die zeichnerisch dargestellte Zylinderkopfdichtung ist ausgelegt für Verbrennungsmaschinen mit mehreren Zylindern. Die Dichtung 1 besteht im wesentlichen aus einem plattenförmigen Körper 2, der mit Durchbrechungen 3 versehen ist, die mit den Zylindern der Maschine fluchten. Durchbrechungen oder Bohrungen 4 sind als Durchgänge für Öl, Kühlwasser und els Schraubenlöcher vorgesehen. Der Plattenkörper 2 ist aus einem Metallblech 5 und Schichten aus Graphitfolien 6, 7 gebildet, die das Blech 5 beidseitig umschließen (Fig. 2). Die kompressiblen Graphitschichten, deren Rohdichte 1,0 bis 1,6 g/cm$^3$ beträgt, sind mit dem Blech verklebt. Im allgemeinen ist die Dicke des Blechs etwa 0,2 bis 2,0 mm und die Dicke der Graphitschichten 0,2 bis 1,0 mm. Der an den Brennraumdurchgang 3 grenzende Rand 8 des Metallblechs 5 ist umgebördelt und grenzt die Dichtung gegen den Brennraumdurchgang ab. Das Blech 5 ist mit wellenförmigen Prägungen 9 bzw. kreisringförmigen Stauchungen 11 versehen, deren Höhe kleiner ist als die Höhe des aufgebogenen Rands 8. Dabei werden die Prägungen 9 bzw. Stauchungen 11 vom Bohrungsrand aus betrachtet immer kleiner und damit die jeweilige Stärke 13 der die Wellenberge bedeckenden Graphitschichten größer. Die Prägungen 9 und Stauchungen 11 umschließen den nicht dargestellten Brennraumdurchgang und bilden Ringzonen 10 erhöhter Flächenpressung, wobei die Flächenpressung mit der Entfernung vom Brennraumdurchgang abnimmt.

In Fig. 3 ist eine andere Ausführung der Zylinderkopfdichtung im Querschnitt dargestellt. Das Blech 5 weist an den Rändern 8' durch Stauchen gebildete Verdickungen 11 auf. Die Höhe der die Dichtung gegen den Brennraumdurchgang abschirmenden ersten Verdickung ist gleich der Dicke der Dichtung im Funktionszustand. Die ringförmigen Zonen 12 erhöhter Flächenpressung erstrecken sich symmetrisch auf der oberen und unteren Dichtungsfläche.

## Ansprüche

1.  Zylinderkopfdichtung (1) in Verbrennungskraftmaschinen mit wenigstens einer einen Brennraumdurchgang bildenden Öffnung (3), bestehend aus einem Metallblech (5), das mit wenigstens einer den Brennraumdurchgang (3) konzentrisch umschließenden wellenförmigen Prägung (9) versehen und beidseitig mit Schichten aus Graphitfolie (6, 7) bedeckt ist, dadurch gekennzeichnet, daß am Brennraumdurchgang (3) das Metallblech (5) U-förmig so aufgebogen ist, daß die Schenkel der U-förmigen Aufbiegung (8) im wesentlichen parallel zu den Ebenen der Dichtflächen liegen und die Folienschichten (6, 7) gegen den Brennraumdurchgang (3) abgeschirmt sind.

2.  Zylinderkopfdichtung (1) nach Patentanspruch 1, dadurch gekennzeichnet, daß die Höhe der U-förmigen Aufbiegung (8) größer als die Höhe der wellenförmigen Prägung (9) ist.

3.  Zylinderkopfdichtung (1) nach den Patentansprüchen 1 und 2, dadurch gekennzeichnet, daß das Metallblech (5) wenigstens zwei konzentrische wellenförmige Prägungen (9) aufweist, deren Höhe ihrem Abstand vom Brennraumdurchgang (3) umgekehrt proportional ist.

4.  Zylinderkopfdichtung (1) nach den Patentansprüchen 1 bis 3, dadurch gekennzeichnet, daß der gegenseitige Abstand der Prägungen (9) das zwei- bis dreifache der Blechdicke beträgt.

5. Zylinderkopfdichtung (1') in Verbrennungskraftmaschinen mit wenigstens einer einen Brennraumdurchgang bildenden Öffnung (3), bestehend aus einem Metallblech (5), das mit wenigstens einer den Brennraumdurchgang (3) konzentrisch umschließenden, sich im wesentlichen bis auf die Höhe der Dichtflächen nach oben und unten erstreckenden, wulstförmigen Prägung mit gekrümmten Begrenzungsflächen (11) versehen und beidseitig mit Schichten aus Graphitfolie (6, 7) bedeckt ist,
dadurch gekennzeichnet, daß
die Höhe der dem Brennraumdurchgang (3) am nächsten befindlichen wulstförmigen Prägung (11) gleich der Dicke der Dichtung (1') im Funktionszustand ist und sich an diese erste wulstförmige Prägung wenigstens zwei konzentrische, ebenfalls wulstförmige Prägungen (11) anschließen, deren Höhe nach oben und unten geringer als die Höhe der Dichtung an der den Brennraumdurchgang bildenden Öffnung (3) und umgekehrt proportional ihrem Abstand von dieser Öffnung (3) ist.

6. Zylinderkopfdichtung (1') nach Patentanspruch 5,
dadurch gekennzeichnet, daß
der gegenseitige Abstand der wulstförmigen Prägungen (11) das zwei- bis dreifache der Blechdicke beträgt.

## Claims

1. Cylinder head gasket (1) in internal combustion engines having at least one opening (3) forming a combustion chamber passage, the gasket consisting of a metal sheet (5) which is provided with at least one wave-shaped embossing (9) concentrically enclosing the combustion chamber passage (3) and which is covered on both sides with graphite foil layers (6, 7), characterised in that, at the combustion chamber passage (3), the metal sheet (5) is so bent up into a U-shape that the limbs of the U-shaped bending-up (8) lie essentially parallel to the planes of the sealing surfaces and the foil layers (6, 7) are shielded from the combustion chamber passage (3).

2. Cylinder head gasket (1) according to claim 1, characterised in that the height of the U-shaped bending-up (8) is greater than the height of the wave-shaped embossing (9).

3. Cylinder head gasket (1) according to claims 1 and 2, characterised in that the metal sheet (5) has at least two concentric wave-shaped embossings (9) whose height is inversely proportional to their distance from the combustion chamber passage (3).

4. Cylinder head gasket (1) according to claims 1 to 3, characterised in that the mutual separation of the embossings (9) amounts to two to three times the thickness of the metal sheet.

5. Cylinder head gasket (1') in internal combustion engines having at least one opening (3) forming a combustion change passage, the gasket consisting of a metal sheet (5) which is provided with at least one bead-shaped embossing with curved boundary surfaces (11) concentrically surrounding the combustion chamber passage (3), extending essentially to the height of the sealing surfaces upwardly and downwardly and which is covered on both sides with layers of graphite foil (6, 7), characterised in that the height of the bead-shaped embossing (11) located nearest to the combustion chamber passage (3) is equal to the thickness of the gasket (1') in its operating state and at least two concentric likewise bead-shaped embossings (11) adjoin this first bead-shaped embossing, the height of which two concentric embossings (11) is upwardly and downwardly less than the height of the gasket at the opening (3) forming the combustion chamber passage and is inversely proportional to their distance from this opening (3).

6. Cylinder head gasket (1') according to claim 5, characterised in that the mutual separation of the bead-shaped embossings (11) amounts to two to three times the thickness of the metal sheet.

## Revendications

1. Joint de culasse (1) dans des moteurs à combustion interne comprenant une ouverture (3) au moins constituant un passage de la chambre de combustion, constitué par une plaque de métal (5), qui est pourvue au moins d'un estampage (9) en forme d'ondulations entourant concentriquement le passage de la chambre de combustion (3) et qui est recouverte des deux côtés de couches en feuille de graphite (6, 7), caractérisé en ce que la plaque (5) de métal est, au niveau du passage de la chambre de combustion (3), repliée en forme d'U de telle sorte que les branches du pliage (8) en forme d'U sont essentiellement parallèles aux plans des faces du joint et que les couches de feuilles (6, 7) sont protégées contre du passage de la chambre de combustion (3).

2. Joint de culasse (1) selon la revendication 1, caractérisé en ce que la hauteur du pliage (8) en forme d'U est supérieure à la hauteur de l'estampage (9) en forme d'ondulations.

3. Joint de culasse (1) selon les revendications 1 et 2, caractérisé en ce que la plaque de métal (5) présente au moins deux estampages (9) concentriques en forme d'ondulations, dont la hauteur est inversement proportionnelle à leur éloignement du passage de la chambre de combustion (3).

4. Joint de culasse (1) selon l'une des revendications 1 à 3, caractérisé en ce que la distance mutuelle des estampages (9) correspond au double ou au triple de l'épaisseur de la tôle.

5. Joint de culasse (1') dans des moteurs à combustion interne ayant au moins une ouverture (3) constituant un passage de la chambre de combustion, constitué par une plaque de métal (5), qui est pourvue d'au moins un estampage en forme de bourrelet avec des surfaces de délimitation (11) incurvées, qui entoure concentriquement le passage de la chambre de combustion (3) et s'étend essentiellement vers le haut et vers le bas jusqu'à la hauteur des surfaces du joint et qui est recouvert des deux côtés de couches en feuille de graphite (6, 7), caractérisé en ce que la hauteur de l'estampage (11) en forme de bourrelet se trouvant la plus proche du passage de la chambre de combustion (3) est égale à l'épaisseur du joint (1') à l'état de fonctionnement et en ce que se raccordent à ce premier estampage en forme de bourrelet au moins deux estampages (11) concentriques, également en forme de bourrelets, dont la hauteur vers le haut et vers le bas est inférieure à la hauteur du joint au niveau de l'ouverture (3) constituant le passage de la chambre de combustion et est inversement proportionnelle à leur éloignement de cette ouverture (3).

6. Joint de culasse (1') selon la revendication 5, caractérisé en ce que la distance mutuelle des estampages (11) en forme de bourrelets correspond à deux à trois fois l'épaisseur de la tôle.

Fig. 1

_Fig. 2_

_Fig. 3_

EP 0 268 134 B1